# EUROPEAN PATENT APPLICATION

(11) **EP 4 400 925 A1**
(43) Date of publication of application: **17.07.2024**
(21) Application number: 22866959.4
(22) Date of filing: 22.03.2022
(51) Int. Cl.: G05B 19/418

(54) **MANAGEMENT DEVICE AND MANAGEMENT METHOD**

(30) Priority: 09.09.2021 JP 2021146909
(71) Applicant: OMRON Corporation, Kyoto 600-8530 (JP)
(72) Inventor: OMORI, Takashi, Kyoto-shi, Kyoto 600-8530 (JP); OZAWA, Katsutoshi, Kyoto-shi, Kyoto 600-8530 (JP); IN, Tetsu, Kyoto-shi, Kyoto 600-8530 (JP); MIZUSHIMA, Kenji, Kyoto-shi, Kyoto 600-8530 (JP)
(74) Representative: Mewburn Ellis LLP
(86) International application number: PCT/JP2022/013185
(87) International publication number: WO 2023/037627

(57) **Abstract**

A management method includes: acquiring event information indicating occurrence of an event at the production line; collecting, for each of individual products, time information indicating a processing start time and a processing end time of each of a plurality of processes; specifying a static bottleneck process of the plurality of processes based on the time information; and calculating, for each of the individual products, an expected completion time of processing by the production line based on an end time of the static bottleneck process for the individual product during a period that is prior to the occurrence of the event. Thus, the management method can assist a person with no prior knowledge in finding wastefulness in an operation at the production line.

## Description

### TECHNICAL FIELD

The present disclosure relates to a management device and a management method.

### BACKGROUND ART

In order to improve efficiency at a production line including a plurality of processes, it is desirable to find various types of wastefulness in the plurality of processes. In order to find such wastefulness, Japanese Patent Laying-Open No. 2010-40007 (PTL 1) discloses an operation management system that manages a time regarding each operation of a plurality of processes, wherein a diagram on a coordinate plane in which one axis represents the time and the other axis represents the plurality of processes is displayed on a display unit.

### CITATION LIST

### PATENT LITERATURE

PTL 1: Japanese Patent Laying-Open No. 2010-40007

### SUMMARY OF INVENTION

### TECHNICAL PROBLEM

In the technology disclosed in PTL 1, in order to find wastefulness from the diagram, the manager needs to know a state of the diagram with no wastefulness as prior knowledge, and needs to compare the state with the current diagram. Therefore, a person with no prior knowledge cannot readily find wastefulness, disadvantageously.

The present disclosure has been made in view of the above-described problem and has an object to provide a management device and a management method, by each of which a person with no prior knowledge is assisted in finding wastefulness in an operation at a production line.

### SOLUTION TO PROBLEM

According to one example of the present disclosure, a management device manages an operational status of a production line including a plurality of processes. The management device includes a first acquisition unit, a collection unit, a specifying unit, and a calculation unit. The first acquisition unit acquires event information indicating occurrence of an event at the production line. The collection unit collects, for each of individual products processed in the plurality of processes, time information indicating a processing start time and a processing end time of each of the plurality of processes. The specifying unit specifies a static bottleneck process of the plurality of processes based on the time information. The calculation unit calculates, for each of the individual products, an expected completion time of processing by the production line based on an end time of the static bottleneck process for the individual product during a period that is prior to the occurrence of the event.

According to the present disclosure, the manager can find wastefulness of the operation at the production line by comparing, for each individual product, the expected completion time and the time at which the processing by the production line is actually completed. That is, the manager can find wastefulness in the operation at the production line without prior knowledge.

In the above disclosure, the management device includes a provision unit that provides a graph in which a first axis represents a time and a second axis represents an order of introduction of the individual products. For each of the individual products, the graph shows a processing time span of each of the plurality of processes.

According to the present disclosure, the manager can readily know the processing time span of each of the plurality of processes for each individual product by checking the graph.

In the above disclosure, the graph further includes a line representing the expected completion time for each of the individual products.

According to the present disclosure, the line representing the expected completion time for each individual product is a substantially straight line. Therefore, the manager can readily know the expected completion time for each individual product.

In the above disclosure, the graph includes a mark corresponding to the event, at a processing time span that corresponds to a process in which the event has occurred and that includes a time at which the event has occurred.

According to the present disclosure, by checking the graph, the manager can readily specify a cause of a large time difference between the expected completion time and the actual processing end time of the production line.

In the above-described disclosure, the calculation unit calculates a delay time that is a difference between the expected completion time and a processing end time of a final process of the plurality of processes.

According to the present disclosure, when the delay time is long, the manager can recognize that wastefulness in the operation has occurred.

In the above disclosure, based on the time information, the specifying unit calculates a production time per product for each of the plurality of processes, and specifies the static bottleneck process based on the production time per product.

According to the present disclosure, the static bottleneck process can be specified in consideration of the production time per product.

In the above disclosure, the management device includes: a second acquisition unit that acquires a first video from an image capturing device having a field of vision including a range of action of an operator at the production line; and a generation unit that generates, based on the time information, a second video indicating a change of a position of each of the individual products over time. The provision unit provides a screen on which the first video and the second video are displayed in synchronization with each other.

According to the present disclosure, by checking the first video and the second video, the manager can readily know a relation between the position of the operator and the position of the individual product.

According to one example of the present disclosure, a management method for managing an operational status of a production line including a plurality of processes includes first to fourth steps. The first step is a step of acquiring event information indicating occurrence of an event at the production line. The second step is a step of collecting, for each of individual products processed in the plurality of processes, time information indicating a processing start time and a processing end time of each of the plurality of processes. The third step is a step of specifying a static bottleneck process of the plurality of processes based on the time information. The fourth step is a step of calculating, for each of the individual products, an expected completion time of processing by the production line based on an end time of the static bottleneck process for the individual product during a period that is prior to the occurrence of the event.

According to the present disclosure, a person with no prior knowledge can be also assisted in finding wastefulness in the operation at the production line.

### ADVANTAGEOUS EFFECTS OF INVENTION

According to the present disclosure, a person with no prior knowledge can be assisted in finding wastefulness in an operation at a production line.

### BRIEF DESCRIPTION OF DRAWINGS

Fig. 1 is a diagram showing an exemplary system to which a management device according to an embodiment is applied.
Fig. 2 is a diagram showing an exemplary production line applied to the system of the present embodiment.
Fig. 3 is a diagram showing an exemplary individual product processed by the production line shown in Fig. 2.
Fig. 4 is a schematic diagram showing a hardware configuration of the management device.
Fig. 5 is a schematic diagram showing a functional configuration of the management device.
Fig. 6 is a diagram illustrating an exemplary calculation performed to specify a static bottleneck process.
Fig. 7 is a diagram illustrating a method of calculating an expected completion time.
Fig. 8 is a diagram showing an exemplary information provision screen provided by a conventional management system.
Fig. 9 is a diagram showing an exemplary information provision screen provided in the present embodiment.
Fig. 10 is a diagram showing an exemplary selection screen for a playback time span.
Fig. 11 is a diagram showing another exemplary information provision screen provided in the present embodiment.
Fig. 12 is a diagram showing still another exemplary information provision screen provided in the present embodiment.

### DESCRIPTION OF EMBODIMENTS

Embodiments of the present invention will be described in detail with reference to figures. It should be noted that the same or corresponding portions in the figures are denoted by the same reference characters and will not be described repeatedly. Modifications described below may be selectively combined as appropriate.

### §1 Application

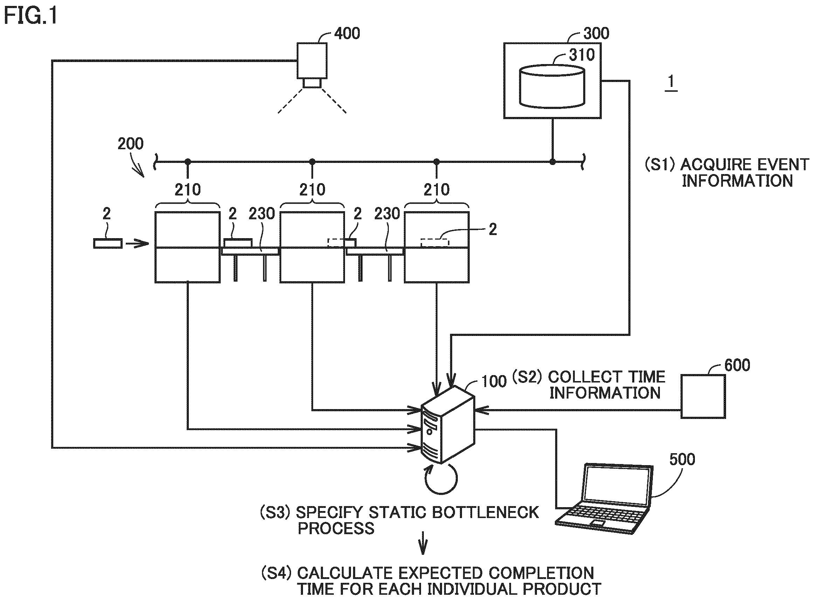

An outline of a system to which a management device according to the present embodiment is applied will be described. Fig. 1 is a diagram showing an exemplary system to which a management device according to an embodiment is applied. As shown in Fig. 1, a system 1 includes a management device 100, a production line 200, an upper-level system 300, a camera 400 serving as an image capturing device, a terminal 500, and a time synchronization server 600. System 1 is provided in a production site such as a factory.

Production line 200 includes: a plurality of processes 210 for sequentially processing each of individual products 2; and one or more conveyance devices 230 for conveying individual product 2 between adjacent processes 210. It should be noted that individual product 2 is an entity of product and includes an intermediate product.

Upper-level system 300 has a database 310 in which information about production line 200 is accumulated. The information stored in database 310 is acquired from an input device, a facility for the plurality of processes 210 included in production line 200, and a control device (for example, a programmable logic controller (PLC)) (not shown) that controls the facility.

The information stored in database 310 includes event information indicating occurrence of an event at production line 200. The event is such an element that four points (4M), i.e., Man, Machine, Material, and Method are changed, and includes, for example, reallocation of an operator, inspection of the facility, repair of the facility, trouble shooting for the facility, change of a material or a material manufacturer, change of a manufacturing method, change of an inspection method, and the like. The event information indicates a type of the event, a process in which the event has occurred, a time of the occurrence of the event, start time and end time of the event, or the like. For example, in the case of an event that ends in a short time such as the change of a material, the event information indicates an occurrence time of the event, whereas in the case of an event that requires a long time such as the repair of facility, the event information indicates start time and completion time of the event.

Further, the information accumulated in database 310 may include production record information. The production record information indicates a type of introduced product, a lot number, introduction start time and introduction completion time of each lot, the number of produced products, the number of introduction processes, throughput, or the like.

Camera 400 is installed to have a field of vision including a range of action of the operator at production line 200, and captures an image of the field of vision. A captured video is used to check a line of motion of the operator. It should be noted that system 1 may include a plurality of cameras 400.

Management device 100 manages an operational status of production line 200. Terminal 500 is, for example, a general-purpose computer device (a notebook PC, a tablet, a smartphone, or the like), and is connected to management device 100 so as to communicate therewith. In response to a request from terminal 500, management device 100 provides terminal 500 with information indicating the operational status of production line 200. Time synchronization server 600 is disposed on the Internet and manages an absolute time.

Management device 100 performs a management method including steps S1 to S4. In step S1, management device 100 acquires (reads), from database 310 of upper-level system 300, event information indicating occurrence of an event at production line 200.

In step S2, management device 100 collects, for each of individual products 2 processed in the plurality of processes 210, time information indicating processing start time and processing end time of each of the plurality of processes 210. From each process 210, management device 100 receives a signal (hereinafter, referred to as "carry-in signal") indicating that individual product 2 has been carried thereinto and a signal (hereinafter, referred to as "carry-out signal") indicating that individual product 2 has been carried out therefrom. From time synchronization server 600, management device 100 acquires, as the processing start time, a time at which the carry-in signal is received. From time synchronization server 600, management device 100 acquires, as the processing end time, a time at which the carry-out signal is received. Management device 100 manages time information indicating the processing start time and processing end time thus acquired.

It should be noted that the order of performing steps S1, S2 is not particularly limited. For example, management device 100 may perform step S1 whenever an event occurs, or may perform step S 1 whenever a certain period of time (for example, one day) is elapsed. In this case, step S1 is performed after step S2. In step S1, management device 100 acquires event information about an event having occurred within the certain period of time.

In step S3, management device 100 specifies a static bottleneck process of the plurality of processes 210 based on the time information. The static bottleneck process is a process that determines production efficiency of production line 200.

The static bottleneck process is a process that steadily affects a pitch time of the whole of production line 200 the most during a steady progress of the processes. The pitch time is also referred to as a tact time, and is the maximum value of a cycle time of each process. The cycle time is a time of an operation cycle from completion of operation for individual product 2 to completion of operation for next individual product 2. As the static bottleneck process, a process having a maximum cycle time is specified. In other words, as the static bottleneck process, a process in which the number of individual products 2 output per unit time is minimum is specified. It should be noted that bottleneck processes also include a dynamic bottleneck process. The dynamic bottleneck process is a process that temporarily affects the pitch time of the whole of production line 200 due to processing capability being attenuated by sudden occurrence of an event. In the present embodiment, the static bottleneck process is specified, rather than the dynamic bottleneck process.

In step S4, management device 100 calculates, for each of individual products 2, an expected completion time of the processing by production line 200 based on the end time of the static bottleneck process for individual product 2 during a period that is prior to the occurrence of the event.

The expected completion time is a time at which the processing by production line 200 is completed when it is assumed that no event has occurred. Therefore, the manager can find wastefulness in the operation at production line 200 by comparing, for each individual product 2, the expected completion time and the time at which the processing by production line 200 is actually completed. In other words, the manager can find the wastefulness in the operation at production line 200 without having prior knowledge in advance with regard to the state of the diagram with no wastefulness.

### §2 Specific Example

### <Exemplary Production Line>

Production line 200 included in system 1 is not limited to the line including three processes 210 shown in Fig. 1, and can have various forms.

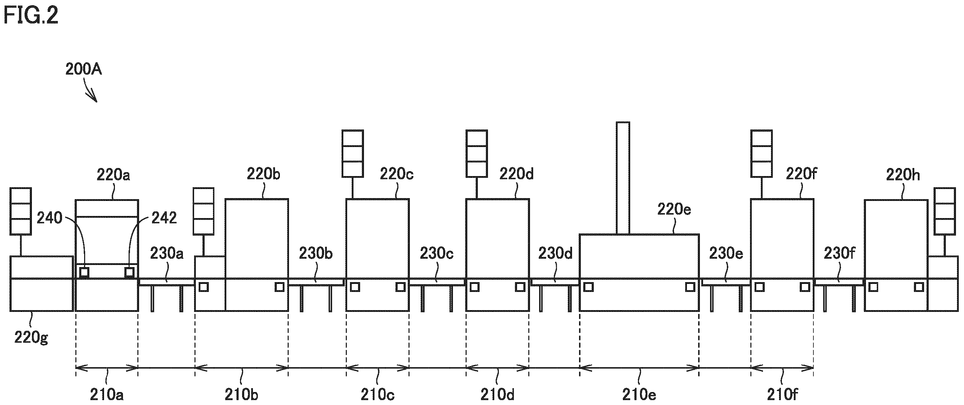

Fig. 2 is a diagram showing an exemplary production line applied to the system of the present embodiment. Fig. 2 shows a production line 200A for implementing surface mount technology (SMT).

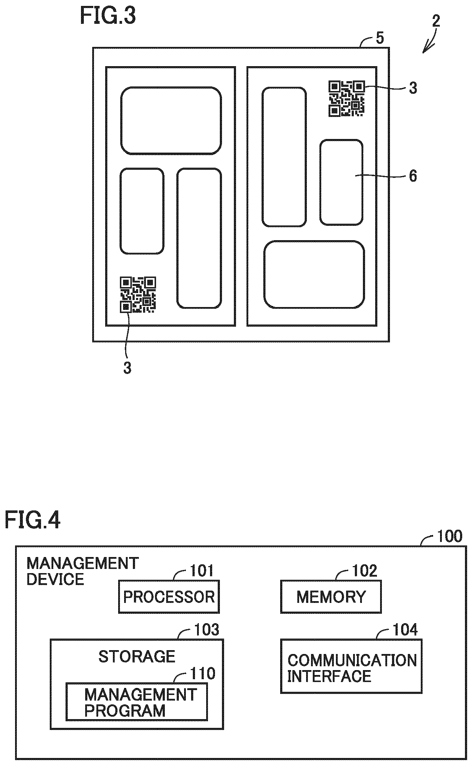

Fig. 3 is a diagram showing an exemplary individual product processed by the production line shown in Fig. 2. As shown in Fig. 3, individual product 2 has a PCB substrate 5 and is also referred to as an "individual piece". By processing individual product 2 using production line 200A, an electronic circuit 6 is mounted on PCB substrate 5.

A two-dimensional code 3 indicating an individual ID for specifying individual product 2 is printed on PCB substrate 5 in advance. It should be noted that two-dimensional codes 3 are printed at a plurality of positions in the example shown in Fig. 3; however, two-dimensional code 3 may be printed at only one position. When two-dimensional codes 3 are printed at the plurality of positions, a code reader described later may be installed at a position at which one of two two-dimensional codes 3 can be read. Therefore, a degree of freedom in the installation position of the code reader is increased.

As shown in Fig. 2, production line 200A includes six processes 210a to 210f. Individual product 2 is conveyed in the order of processes 210a to 210f. Hereinafter, when processes 210a to 210f are not particularly distinguished from one another, each of processes 210a to 210f is referred to as "process 210". In each process 210, processing is performed onto individual product 2 conveyed from the upstream side, and individual product 2 having been through the processing is output to the downstream side. A facility 220 is installed in each process 210.

First process 210a is a printing process. In process 210a, a printing machine 220a is installed as facility 220. Printing machine 220a receives individual product 2 from a loader 220g, and applies a cream solder to PCB substrate 5. Individual product 2 having been through the processing of process 210a is conveyed to process 210b by a conveyance device 230a.

Second process 210b is a print inspection process. In process 210b, a print inspection machine 220b is installed as facility 220. Print inspection machine 220b inspects whether or not the shape of the cream solder falls within a reference range based on, for example, a captured image of PCB substrate 5 having the cream solder applied thereon. Individual product 2 having been through the processing of process 210b is conveyed to process 210c by a conveyance device 230b.

Third process 210c is a mounting process. In process 210c, a mounting machine 220c is installed as facility 220. Mounting machine 220c mounts the electronic component at a predetermined position on PCB substrate 5. Individual product 2 having been through the processing of process 210c is conveyed to process 210d by a conveyance device 230c.

Fourth process 210d is a mounting inspection process. In process 210d, a mounting inspection machine 220d is installed as facility 220. Mounting inspection machine 220d inspects whether or not the position of the electronic component falls within a reference range based on, for example, a captured image of PCB substrate 5 having the electronic component mounted thereon. Individual product 2 having been through the processing of process 210d is conveyed to process 210e by a conveyance device 230d.

Fifth process 210e is a reflow process. In process 210e, a reflow furnace 220e is installed as facility 220. Reflow furnace 220e heats PCB substrate 5 to melt the cream solder, thereby soldering the electronic component. Individual product 2 having been through the processing of process 210e is conveyed to process 210f by a conveyance device 230e.

Sixth process 210f is a reflow inspection process. In process 210f, a reflow inspection machine 220f is installed as facility 220. Reflow inspection machine 220f inspects whether or not there is a failure in the soldering based on, for example, a captured image of PCB substrate 5 having the electronic component soldered thereon. Individual product 2 having been through the processing of process 210f is conveyed to an unloader 220h by a conveyance device 230f. Unloader 220h carries individual product 2 produced by production line 200A to the outside.

Each of facilities 220 (printing machine 220a, print inspection machine 220b, mounting machine 220c, mounting inspection machine 220d, reflow furnace 220e, and reflow inspection machine 220f) installed in processes 210a to 210f has code readers 240, 242. It should be noted that in Fig. 2, reference characters 240, 242 are described only for the code readers of printing machine 220a installed in process 210a.

Code reader 240 is disposed in the vicinity of the entrance of facility 220, reads two-dimensional code 3 of individual product 2 introduced into facility 220, and outputs a carry-in signal including the read individual ID. The carry-in signal is output to management device 100.

Code reader 242 is disposed in the vicinity of the exit of facility 220, reads two-dimensional code 3 of individual product 2 to be discharged from facility 220, and outputs a carry-out signal including the read individual ID. The carry-out signal is output to management device 100.

### <Hardware Configuration of Management Device>

Fig. 4 is a schematic diagram showing a hardware configuration of a management device. Management device 100 typically has a structure according to a general-purpose computer architecture.

As shown in Fig. 4, management device 100 includes a processor 101, a memory 102, a storage 103, and a communication interface 104.

Processor 101 is constituted of a CPU (central processing unit), an MPU (micro processing unit), or the like. Memory 102 is constituted of, for example, a volatile storage device such as a DRAM (Dynamic Random Access Memory) or an SRAM (Static Random Access Memory). Storage 103 is constituted of, for example, a nonvolatile storage device such as an SSD (Solid State Drive) or an HDD (Hard Disk Drive). Storage 103 stores a management program 110 for managing the operational status of production line 200. Communication interface 104 exchanges data with an external device (for example, facility 220, upper-level system 300, or camera 400 of each process 210).

### <Functional Configuration of Management Device>

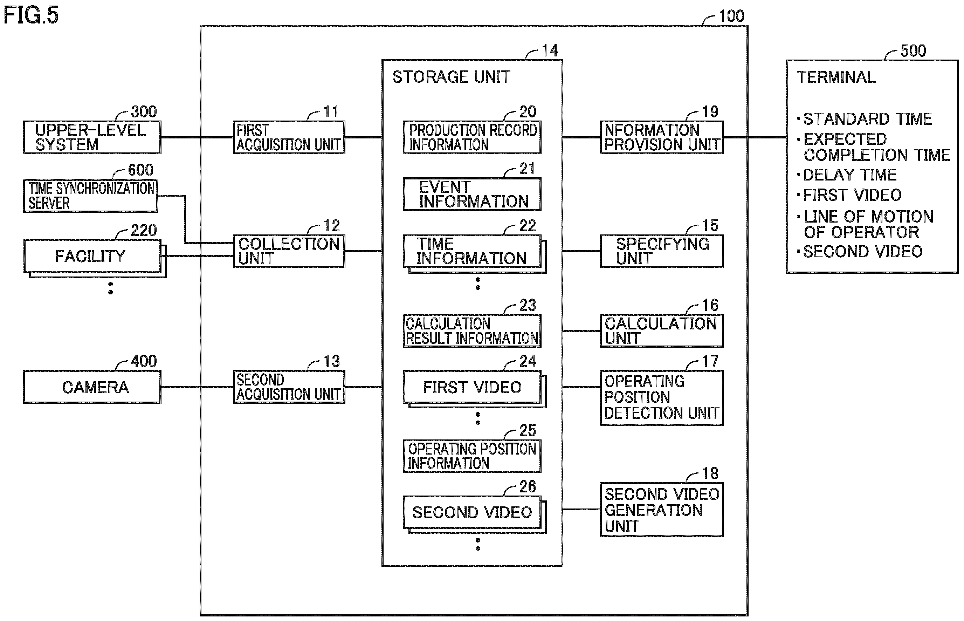

Fig. 5 is a schematic diagram showing a functional configuration of the management device. As shown in Fig. 5, management device 100 includes a first acquisition unit 11, a collection unit 12, a second acquisition unit 13, a storage unit 14, a specifying unit 15, a calculation unit 16, an operating position detection unit 17, a second video generation unit 18, and an information provision unit 19. Storage unit 14 is implemented by memory 102 and storage 103 shown in Fig. 4. First acquisition unit 11, collection unit 12, and second acquisition unit 13 are implemented by communication interface 104 and processor 101 that executes management program 110. Specifying unit 15, calculation unit 16, operating position detection unit 17, second video generation unit 18, and information provision unit 19 are implemented by processor 101 that executes management program 110.

From upper-level system 300, first acquisition unit 11 acquires event information 21 indicating occurrence of an event at production line 200. Further, first acquisition unit 11 also acquires production record information 20 from upper-level system 300. First acquisition unit 11 stores acquired production record information 20 and event information 21 into storage unit 14. First acquisition unit 11 may acquire new production record information 20 and event information 21 from upper-level system 300 whenever new production record information 20 and event information 21 are accumulated in upper-level system 300. Alternatively, from upper-level system 300, first acquisition unit 11 may acquire, whenever a certain period of time (for example, each one day) is elapsed, production record information 20 and event information 21 accumulated within the certain period of time.

Collection unit 12 collects, for each of individual products 2 processed in the plurality of processes 210, time information 22 indicating the processing start time and processing end time of each of the plurality of processes 210. Collection unit 12 receives the carry-in signal and the carry-out signal from facility 220 installed in each process 210. From time synchronization server 600, collection unit 12 acquires, as the processing start time, the time at which the carry-in signal is received. From time synchronization server 600, collection unit 12 acquires, as the processing end time, the time at which the carry-out signal is received. Collection unit 12 generates time information 22 indicating the processing start time and the processing end time of each process 210 for each individual product 2, and stores generated time information 22 into storage unit 14. In this way, for each process 210, collection unit 12 collects time information 22 for each individual product 2.

Time information 22 is information in which a process ID for identifying process 210 in which facility 220 is installed, an individual ID for identifying individual product 2, the processing start time, and the processing end time are associated with one another. Collection unit 12 incorporates, into time information 22, the process ID for identifying process 210 including facility 220 that transmits the carry-in signal and the carry-out signal. Further, collection unit 12 incorporates, into time information 22, the individual ID (individual ID corresponding to two-dimensional code 3 of individual product 2) read from each of the carry-in signal and the carry-out signal.

Second acquisition unit 13 acquires first video data (hereinafter, simply referred to as "first video") 24 from camera 400. First video 24 is acquired through image capturing by camera 400. As described above, the field of vision of camera 400 includes the range of action of the operator at production line 200. Therefore, the operator operating at production line 200 is captured in first video 24. Whenever a predetermined time (for example, one minute as a unit) is elapsed, second acquisition unit 13 acquires first video 24 based on the predetermined time as a unit. Second acquisition unit 13 stores acquired first video 24 into storage unit 14. When system 1 includes a plurality of cameras 400, first video 24 is stored in storage unit 14 in association with a camera ID for identifying camera 400 having captured first video 24.

Specifying unit 15 specifies the static bottleneck process of the plurality of processes 210 based on time information 22 stored in storage unit 14. Specifying unit 15 performs calculation for specifying the static bottleneck process.

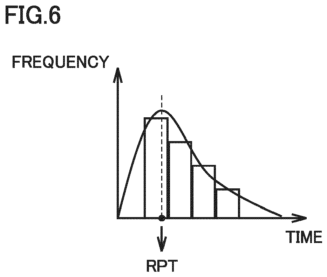

Fig. 6 is a diagram illustrating exemplary calculation performed to specify the static bottleneck process. Specifying unit 15 calculates a standard time for each process 210 based on time information 22 acquired from facility 220 of process 210.

Specifically, for each of the plurality of processes 210, specifying unit 15 extracts, from the pieces of time information 22 stored in storage unit 14, time information 22 including the process ID corresponding to process 210. Specifying unit 15 calculates a processing time from the processing start time to the processing end time for each piece of extracted time information 22. As shown in Fig. 6, specifying unit 15 creates histograms of the calculated processing times, and determines a median value thereof as the standard time. The standard time is also referred to as an RPT (Raw Process Time) and corresponds to a standard processing time in process 210.

Next, specifying unit 15 calculates a production time per product for each of the plurality of processes 210. Specifically, for each process 210, specifying unit 15 stores in advance the number N of products that can be processed simultaneously. Specifying unit 15 calculates a time by dividing the standard time by N, as the production time per product.

For example, in the case of a process 210 in which p facilities 220 that can each process only one individual product 2 are installed, specifying unit 15 stores "p" as the number of products that can be simultaneously processed. On the other hand, in the case of a process 210 in which only one facility 220 (for example, reflow furnace 220e) that can accommodate q individual products 2 at the same time is installed, specifying unit 15 stores "q" as the number of products that can be simultaneously processed.

Specifying unit 15 specifies, as the static bottleneck process, a process having the longest production time per product.

It should be noted that the static bottleneck process can be changed depending on a type or lot of products. Therefore, specifying unit 15 may read the introduction start time and introduction completion time for each type or lot from production record information 20. Specifying unit 15 may specify the static bottleneck process for each type or lot based on time information 22 including the individual IDs of individual products 2 introduced during a period of time from the read introduction start time to the read introduction completion time.

Calculation unit 16 calculates, for each of individual products 2, an expected completion time of the processing by production line 200 based on the processing end time of the static bottleneck process for individual product 2 during a period that is prior to the occurrence of the event. At production line 200, the processing is performed based on the lot as a unit. Therefore, calculation unit 16 calculates the expected completion time for each individual product 2 of each lot.

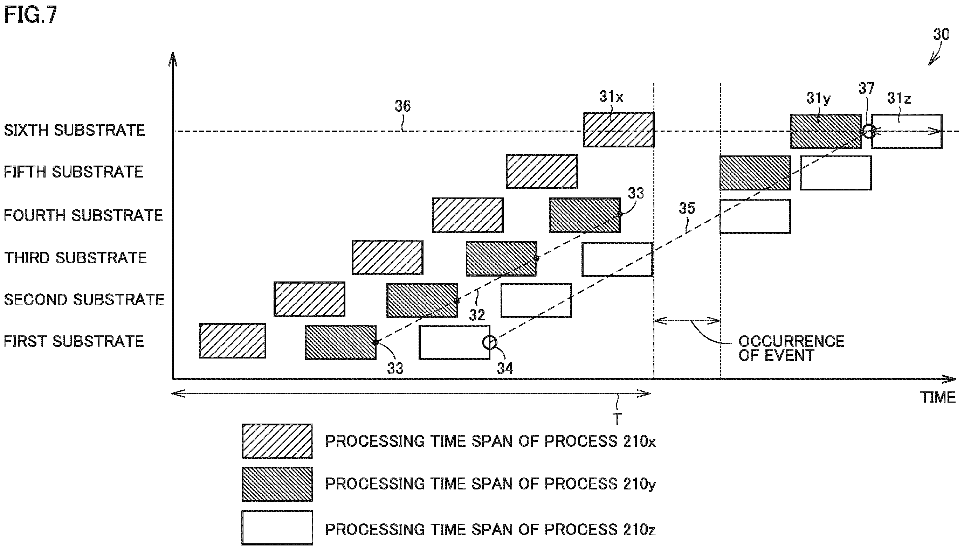

Fig. 7 is a diagram illustrating a method of calculating the expected completion time. Fig. 7 shows an example in which production line 200 includes three processes 210x, 210y, 210z and process 210y is the static bottleneck process. Fig. 7 shows a graph 30 in which the horizontal axis represents the time and the vertical axis represents the order of introduction of individual products 2. Graph 30 shows processing time spans 31x, 31y, 31z of processes 210x, 210y, 210z for each individual product 2. In graph 30, processing time spans 31x, 31y, 31z are defined by time information 22.

When no event has occurred, the production speed depends on the processing speed in process 210y that is the static bottleneck process. Therefore, calculation unit 16 specifies a period T that is prior to occurrence time (or start time) of a first event indicated by event information 21. Calculation unit 16 calculates the number (hereinafter, referred to as "ideal processing speed") of individual products 2 having been through process 210y per unit time in period T. Specifically, calculation unit 16 finds an approximate straight line 32 to points 33 corresponding to the respective processing end times of process 210y for individual products 2 in period T. The ideal processing speed corresponds to the slope of approximate straight line 32.

Further, calculation unit 16 finds a line 35 that passes through a point 34 corresponding to the processing end time of a final process 210 for first individual product 2 and that is parallel to approximate straight line 32. Calculation unit 16 calculates, as the expected completion time for the k-th individual product 2, a time that corresponds to an intersection 37 between line 35 and a line 36 at which the value of the vertical axis is k (k = 6 in the figure).

Calculation unit 16 calculates a delay time that is a difference between the expected completion time and the processing end time of final process 210 of the plurality of processes.

Each of the information indicating the standard time of each process 210 as calculated by specifying unit 15 and the information indicating the expected completion time and the delay time as calculated by calculation unit 16 is stored in storage unit 14 as calculation result information 23.

Operating position detection unit 17 detects a position (hereinafter, referred to as "operating position") of the operator at each time based on first video 24. For example, operating position detection unit 17 detects a region of the operator in each frame of first video 24 using a known object recognition technology. For example, operating position detection unit 17 determines the center of a rectangle circumscribing the detected region as the operating position. Operating position detection unit 17 generates operating position information 25 in which the time of each frame and the operating position detected from the frame are associated with each other, and stores generated operating position information 25 into storage unit 14.

Second video generation unit 18 generates a second video indicating a change of the position (hereinafter, referred to as "product position") of each individual product 2 over time based on time information 22. The second video is, for example, an animation in which a mark (hereinafter, referred to as "product mark") corresponding to each individual product 2 is superimposed on a model image of production line 200.

Specifically, for each individual product 2, second video generation unit 18 extracts time information 22 for each process 210. For each process 210, second video generation unit 18 determines the product position at the processing start time as the position of the entrance of process 210 and determines the product position at the processing end time as the position of the exit of process 210. Assuming that each individual product 2 is moved at a constant speed from the entrance to exit of process 210, second video generation unit 18 determines the product position at each time during a period of time from the processing start time to the processing end time.

Further, assuming that each individual product 2 is moved at a constant speed from the exit of a upstream-side process 210 to the entrance of a downstream-side process 210 of two adjacent processes 210, second video generation unit 18 determines the product position at each time during a period of time from the processing end time of upstream-side process 210 to the processing start time of downstream-side process 210.

For the frame at each time of the second video, second video generation unit 18 superimposes the product mark on a position corresponding to the product position at the time on the model image of production line 200, thereby generating the second video. Second video generation unit 18 generates second video 26 for each predetermined time (for example, one minute as a unit).

Information provision unit 19 provides various types of information. Specifically, in response to a request from terminal 500, information provision unit 19 provides terminal 500 with an information provision screen generated in accordance with the information stored in storage unit 14. The information provision screen includes, for example, the standard time and expected completion time indicated by calculation result information 23, the delay time that is a difference between the expected completion time and the actual processing end time of final process 210, first video 24, second video 26, the line of motion of the operator as generated in accordance with operating position information 25, and the like.

### <Specific Example of Information Provision Screen>

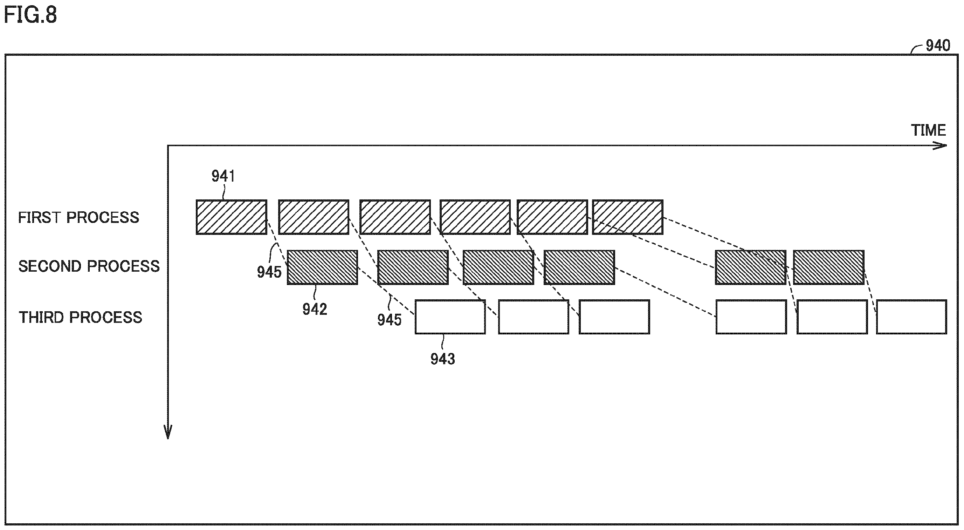

Fig. 8 is a diagram showing an exemplary information provision screen provided by a conventional management system. Fig. 8 shows an information provision screen 940 including a diagram in which the horizontal axis represents a time and the vertical axis represents a plurality of processes. Information provision screen 940 shows a diagram corresponding to production line 200 including three processes. That is, the diagram shows a processing time span 941 of a first process, a processing time span 942 of a second process, and a processing time span 942 of a third process. In such a diagram, it is difficult to show an expected completion time of production line 200 for each individual product 2 when no event has occurred. If the expected completion time is shown in the diagram, it is considered to provide a row corresponding to the final process with a plurality of points respectively corresponding to the expected completion times of the plurality of individual products 2. In this case, it is difficult for the manager to know a correspondence between each of the plurality of points and each of the plurality of individual products 2 introduced. As a result, it is difficult for the manager to find wastefulness.

Further, even if wastefulness can be found, the manager cannot readily specify a cause of the wastefulness. The processing end time of each process for each individual product 2 is indicated by a line 945. Wastefulness at the production line results from an event having occurred in the past. Therefore, the manager specifies a cause of the wastefulness by following line 945. However, the number of lines 945 drawn is the same as the number of individual products 2. Therefore, it is difficult to specify a target line 945 from the multiplicity of lines 945 and follow specified line 945. As a result, it is difficult to specify a cause of the wastefulness. In particular, when a plurality of events have occurred, it is more difficult to specify a cause of the wastefulness.

On the other hand, by using management device 100 according to the present embodiment, the manager can readily specify a cause of wastefulness.

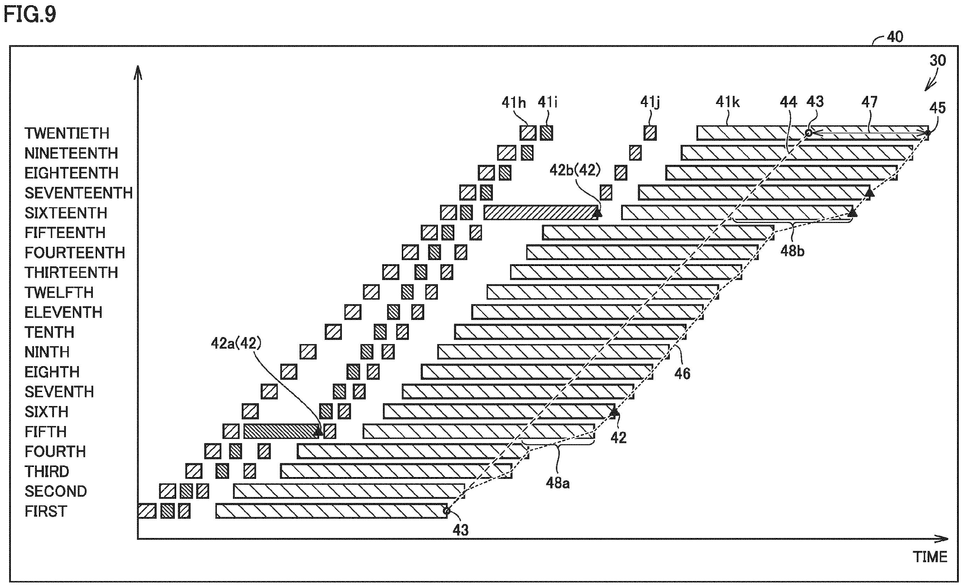

Fig. 9 is a diagram showing an exemplary information provision screen provided in the present embodiment. Fig. 9 shows an information provision screen 40 including a graph 30 in which the first axis (horizontal axis) represents a time and the second axis (vertical axis) represents an order of introduction of individual products 2. Graph 30 shows respective processing time spans 41h to 41k of the four processes for each individual product 2, each of processing time spans 41h to 41k ranging from the processing start time to the processing end time. Information provision screen 40 shown in Fig. 9 is displayed for a target lot.

Based on event information 21, information provision unit 19 specifies a process in which each event has occurred, and an occurrence time or end time (hereinafter, referred to as "event time") of each event. Information provision unit 19 determines a processing time span corresponding to the specified process and including the specified event time. Information provision unit 19 displays a mark 42 (including marks 42a, 42b) indicating occurrence of the event in the determined processing time span in graph 30 of information provision screen 40. That is, graph 30 includes mark 42 corresponding to the event, at the processing time span that corresponds to the process in which the event has occurred and that includes the time at which the event has occurred.

Information provision unit 19 incorporates, in graph 30 of information provision screen 40, a straight line 44 connecting points 43 corresponding to the respective expected completion times of individual products 2. That is, graph 30 includes a straight line 44 indicating the respective expected completion times for individual products 2. Further, information provision unit 19 incorporates, in graph 30, a line 46 connecting points 45 corresponding to the respective processing end times of the final process for individual products 2. Information provision unit 19 incorporates, in graph 30, an arrow 47 indicating a delay time, which is a difference between the expected completion time and the processing end time of the final process for finally introduced individual product 2 of the target lot.

The manager can know the delay time in the target lot by checking the length of arrow 47. Further, by checking a time difference between straight line 44 and line 46, the manager can readily know processing of an individual product 2 for which wastefulness has occurred among the plurality of individual products 2 included in the target lot.

For example, the manager checks that a time difference between line 44 and line 46 for an individual product 2 corresponding to the processing time span including mark 42a is larger than that for an individual product 2 introduced just before the foregoing individual product 2. As a result, the manager can estimate that the event corresponding to mark 42a is a cause of time difference 48a.

Further, the manager can check that a time between straight line 44 and line 46 for each individual product 2 introduced after individual product 2 corresponding to mark 42a coincides with time difference 48a. As a result, the manager can know that an influence of the event corresponding to mark 42a is also maintained for individual product 2 processed after the occurrence of the event.

Further, the manager checks that a time difference between straight line 44 and line 46 for an individual product 2 corresponding to the processing time span including mark 42b is larger than that for an individual product 2 introduced just before the foregoing individual product 2. As a result, the manager can estimate that the event corresponding to mark 42b is a cause of time difference 48b.

Further, the manager can check that a time between line 44 and line 46 for each individual product 2 introduced after individual product 2 corresponding to mark 42b coincides with time difference 48b. As a result, the manager can know that an influence of the event corresponding to mark 42b is also maintained for individual product 2 processed after the occurrence of the event.

Thus, by checking information provision screen 40 shown in Fig. 9, the manager can specify two events corresponding to marks 42a, 42b as the cause of the delay time indicated by arrow 47.

Information provision screen 40 shown in Fig. 9 receives an operation for instructing to play back video. For example, in response to clicking on mark 42, information provision unit 19 provides a screen for selecting a playback time span.

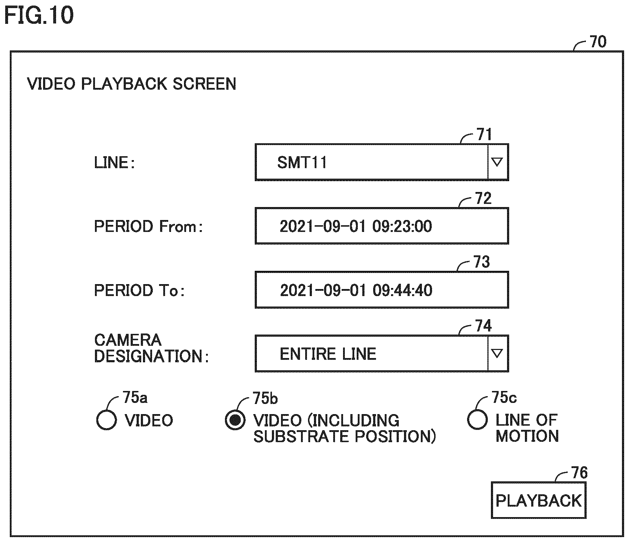

Fig. 10 is a diagram showing an exemplary selection screen for the playback time span. Selection screen 70 includes: an input field 71 for designating production line 200; input fields 72, 73 for selecting a video time span; and an input field 74 for selecting camera 400. The manager inputs necessary items into input fields 71 to 74 in accordance with production line 200, the time span, and camera 400 for each of which the manager desires to check the video.

Further, selection screen 70 includes radio buttons 75a to 75c and a playback button 76. Radio button 75a is selected when it is desired to play back first video 24. Radio button 75b is selected when it is desired to play back first video 24 and second video 26. Radio button 75c is selected when it is desired to display a line of motion of the operator. Information provision unit 19 provides an information provision screen according to selection of radio buttons 75a to 75c in response to clicking on playback button 76.

Information provision unit 19 creates a video to be played back, in response to clicking on playback button 76. For example, information provision unit 19 reads, from storage unit 14, one or more first videos 24 that correspond to the camera ID of camera 400 input in input field 74 and that are included in the playback time span input in input fields 72, 73, and couples one or more first videos 24 together. Similarly, information provision unit 19 reads, from storage unit 14, one or more second videos 26 included in the playback time span, and couples one or more second videos 26 together.

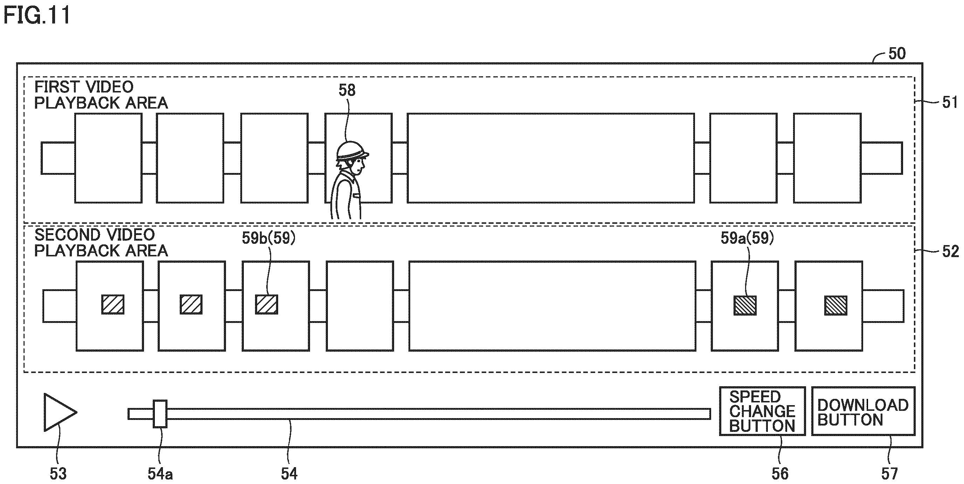

Fig. 11 is a diagram showing another exemplary information provision screen provided in the present embodiment. Fig. 10 shows an information provision screen 50 provided when playback button 76 is clicked with radio button 75b being selected in selection screen 70 shown in Fig. 10.

Information provision screen 50 includes regions 51, 52, a playback button 53, a scroll bar 54, a speed change button 56, and a download button 57.

In response to clicking on playback button 53, information provision unit 19 displays first video 24 and second video 26 on information provision screen 50 with first video 24 and second video 26 being in synchronization with each other. Specifically, first video 24 is displayed in region 51, and second video 26 is displayed in region 52.

An operator 58 is captured in first video 24. Second video 26 includes a product mark 59 at the position of each individual product 2. When individual product 2 is accommodated in facility 220 of each process 210, individual product 2 is not captured in first video 24. On the other hand, in second video 26, product mark 59 is displayed at the position of individual product 2 accommodated in facility 220. Therefore, by checking regions 51, 52, the manager can readily know a relation between the position of operator 58 and the position of each individual product 2 at each time.

It should be noted that a manner of display of product mark 59 preferably differs for each lot of individual products 2. Thus, the manager can know a change of the lot. For example, a product mark 59b represents the product position of the lot introduced next to the lot of individual products 2 corresponding to a product mark 59a.

For example, when the manager specifies an event that is a cause of a delay time on information provision screen 40 shown in Fig. 9, the manager checks first video 24 and second video 26 in a time span including an occurrence time of the event. As a result, the manager can check whether or not the operation status at the time of the occurrence of the event was appropriate.

Alternatively, when there is a large difference in delay time between operators even though the same event has occurred, the manager may determine that a video of an operator with a short delay time represents an ideal operation, and may use the video to teach an operator with a long delay time. By checking the video of the operator with a short delay time, an appropriate relation can be known between the position of individual product 2 and the position of the operator. The operator with a long delay time can learn his/her appropriate position with respect to the position of individual product 2 based on the relation.

Further, when the manner of display of product mark 59 differs for each lot, the manager can know a relation between the operating position of the operator and the product position due to a change of the lot. The manager can use information provision screen 50 shown in Fig. 10 to teach the operation when changing the lot. That is, an operator who takes a long time to change a lot can know an appropriate relation between each of the product position of the lot before the change and the product position of the lot after the change and the position of the operator by checking the video of the other operator, and can learn his/her appropriate position with respect to the product position of each lot.

Information provision unit 19 changes frames displayed in regions 51, 52 in accordance with an operation on cursor 54a of scroll bar 54. Information provision unit 19 changes a playback speed in response to an operation on speed change button 56. Thus, the manager can check the contents of first video 24 and second video 26 in detail for a desired time span by appropriately operating scroll bar 54 and speed change button 56.

In response to clicking on download button 57, information provision unit 19 stores, into a designated folder of terminal 500, files indicating first video 24 and second video 26 to be played back. Thus, the manager can check first video 24 and second video 26 by using the files stored (downloaded) in the designated folder of terminal 500 without accessing management device 100. It should be noted that the files downloaded to terminal 500 indicate a video in which one or more first videos 24 included in the playback time span are coupled together and a video in which one or more second videos 26 included in the playback time span are coupled together.

When playback button 76 is clicked with radio button 75a being selected in selection screen 70 shown in Fig. 10, information provision unit 19 provides an information provision screen in which first video 24 is displayed. When playback button 76 is clicked with radio button 75c being selected on selection screen 70 shown in Fig. 10, information provision unit 19 provides terminal 500 with a screen indicating a line of motion of the operator based on operating position information 25.

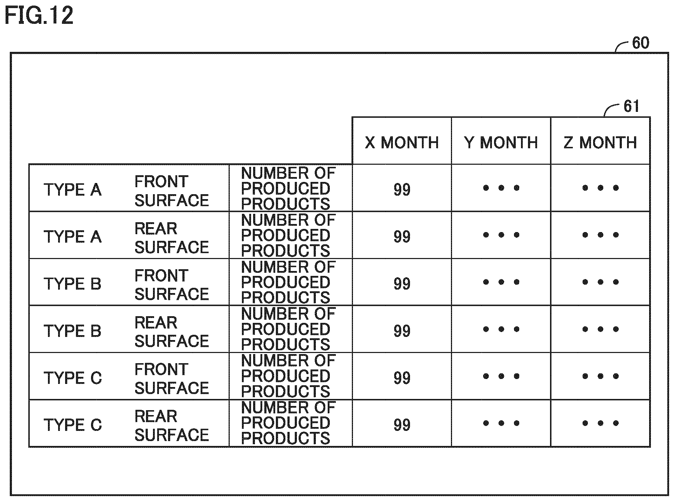

Fig. 12 is a diagram showing still another exemplary information provision screen provided in the present embodiment. Information provision screen 60 shown in Fig. 12 includes a table 61 indicating a change in the number of products produced per month for each type. By checking information provision screen 60, the manager specifies a type for which the number of products produced per month is less than an expected number, and checks information provision screen 40 shown in Fig. 9 for the specified type. Alternatively, on information provision screen 60 shown in Fig. 12, the manager may check an effect of teaching using information provision screen 50 shown in Fig. 11.

It should be noted that information provision unit 19 may provide terminal 500 with an information provision screen indicating the standard time of each process 210.

### <Modification>

In the above description, code readers 240, 242 are installed in the facility installed in process 210. In addition, code readers 240, 242 may also be installed in conveyance device 230 between adjacent processes 210 so as to manage a period during which individual product 2 is conveyed by conveyance device 230.

In the above description, specifying unit 15 calculates the production time per product by dividing the standard time by the number N of products that can be simultaneously processed. However, the method of calculating the production time per product is not limited thereto. A process with a large variation in the histogram shown in Fig. 6 can be a static bottleneck process. Therefore, the production time per product may be calculated in consideration of the variation in the histogram. For example, the sum of the standard time and a time obtained by multiplying the standard deviation of the histogram by a predetermined coefficient may be calculated, and the sum may be divided by the number N of products that can be processed simultaneously, thereby calculating the production time per product.

### §3 Supplementary Notes

As described above, the present embodiment includes the following disclosure.

### (Configuration 1)

A management device (100) for managing an operational status of a production line (200) including a plurality of processes (210), the management device (100) comprising:
a first acquisition unit (11) that acquires event information (21) indicating occurrence of an event at the production line (200);
a collection unit (12) that collects, for each of individual products (2) processed in the plurality of processes (210), time information (22) indicating a processing start time and a processing end time of each of the plurality of processes (210);
a specifying unit (15) that specifies a static bottleneck process of the plurality of processes (210) based on the time information (22); and
a calculation unit (16) that calculates, for each of the individual products (2), an expected completion time of processing by the production line (200) based on an end time of the static bottleneck process for the individual product (2) during a period that is prior to the occurrence of the event.

### (Configuration 2)

The management device (100) according to configuration 1, comprising a provision unit (19) that provides a graph (30) in which a first axis represents a time and a second axis represents an order of introduction of the individual products (2), wherein
for each of the individual products (2), the graph (30) shows a processing time span (41h to 41k) of each of the plurality of processes (210).

### (Configuration 3)

The management device (100) according to configuration 2, wherein the graph (30) further includes a line (44) representing the expected completion time for each of the individual products (2).

### (Configuration 4)

The management device (100) according to configuration 2 or 3, wherein the graph (30) includes a mark (42) corresponding to the event, at a processing time span (41h to 41k) that corresponds to a process in which the event has occurred and that includes a time at which the event has occurred.

### (Configuration 5)

The management device (100) according to any one of configurations 1 to 4, wherein the calculation unit (16) calculates a delay time that is a difference between the expected completion time and a processing end time of a final process of the plurality of processes.

### (Configuration 6)

The management device (100) according to any one of configurations 1 to 5, wherein
based on the time information, the specifying unit (15) calculates a production time per product for each of the plurality of processes, and
the specifying unit (15) specifies the static bottleneck process based on the production time per product.

(Configuration 7)

The management device (100) according to configuration 2, further comprising:
a second acquisition unit (13) that acquires a first video (24) from an image capturing device (400) having a field of vision including an range of action of an operator at the production line (200); and
a generation unit (18) that generates, based on the time information (22), a second video (26) indicating a change of a position of each of the individual products (2) over time, wherein
the provision unit (19) provides a screen on which the first video (24) and the second video (26) are displayed in synchronization with each other.

### (Configuration 8)

A management method for managing an operational status of a production line (200) including a plurality of processes, the management method comprising:
acquiring event information indicating occurrence of an event at the production line (200);
collecting, for each of individual products (2) processed in the plurality of processes (210), time information indicating a processing start time and a processing end time of each of the plurality of processes (210);
specifying a static bottleneck process of the plurality of processes (210) based on the time information; and
calculating, for each of the individual products (2), an expected completion time of processing by the production line (200) based on an end time of the static bottleneck process for the individual product (2) during a period that is prior to the occurrence of the event.

Although the embodiments of the present invention have been described and illustrated in detail, it is clearly understood that the same is by way of illustration and example only and is not to be taken by way of limitation. The scope of the present invention is defined by the terms of the claims, and is intended to include any modifications within the scope and meaning equivalent to the terms of the claims.

### REFERENCE SIGNS LIST

1: system; 2: individual product; 3: two-dimensional code; 5: substrate; 6: electronic circuit; 11: first acquisition unit; 12: collection unit; 13: second acquisition unit; 14: storage unit; 15: specifying unit; 16: calculation unit; 17: operating position detection unit; 18: second video generation unit; 19: information provision unit; 20: production record information; 21: event information; 22: time information; 23: calculation result information; 24: first video; 25: operating position information; 26: second video; 30: graph; 31x, 31y, 31z, 41h, 41k, 941, 942: processing time span; 32: approximate straight line; 35, 36, 46, 945: line; 37: intersection; 40, 50, 60, 940: information provision screen; 42, 42a, 42b: mark; 44: straight line; 47: arrow; 51, 52: region; 53, 76: playback button; 54: scroll bar; 54a: cursor; 56: speed change button; 57: download button; 58: operator; 59, 59a, 59b: product mark; 61: table; 70: selection screen; 71 to 74: input field; 75a to 75c: radio button; 100: management device; 101: processor; 102: memory; 103: storage; 104: communication interface; 110: management program; 200, 200A: production line; 210, 210a to 210f, 210x to 210z: process; 220: facility; 220a: printing machine; 220b: printing inspection machine; 220c: mounting machine; 220d: mounting inspection machine; 220e: reflow furnace; 220f: reflow inspection machine; 220g: loader; 220h: unloader; 230, 230a to 230f: conveyance device; 240, 242: code reader; 300: upper-level system; 310: database; 400: camera; 500: terminal; 600: time synchronization server.

## Claims

1. A management device for managing an operational status of a production line including a plurality of processes, the management device comprising:
a first acquisition unit that acquires event information indicating occurrence of an event at the production line;
a collection unit that collects, for each of individual products processed in the plurality of processes, time information indicating a processing start time and a processing end time of each of the plurality of processes;
a specifying unit that specifies a static bottleneck process of the plurality of processes based on the time information; and
a calculation unit that calculates, for each of the individual products, an expected completion time of processing by the production line based on an end time of the static bottleneck process for the individual product during a period that is prior to the occurrence of the event.

2. The management device according to claim 1, comprising a provision unit that provides a graph in which a first axis represents a time and a second axis represents an order of introduction of the individual products, wherein
for each of the individual products, the graph shows a processing time span of each of the plurality of processes.

3. The management device according to claim 2, wherein the graph further includes a line representing the expected completion time for each of the individual products.

4. The management device according to claim 2 or 3, wherein the graph includes a mark corresponding to the event, at a processing time span that corresponds to a process in which the event has occurred and that includes a time at which the event has occurred.

5. The management device according to any one of claims 1 to 4, wherein the calculation unit calculates a delay time that is a difference between the expected completion time and a processing end time of a final process of the plurality of processes.

6. The management device according to any one of claims 1 to 5, wherein
based on the time information, the specifying unit calculates a production time per product for each of the plurality of processes, and
the specifying unit specifies the static bottleneck process based on the production time per product.

7. The management device according to claim 2, further comprising:
a second acquisition unit that acquires a first video from an image capturing device having a field of vision including a range of action of an operator at the production line; and
a generation unit that generates, based on the time information, a second video indicating a change of a position of each of the individual products over time, wherein
the provision unit provides a screen on which the first video and the second video are displayed in synchronization with each other.

8. A management method for managing an operational status of a production line including a plurality of processes, the management method comprising:
acquiring event information indicating occurrence of an event at the production line;
collecting, for each of individual products processed in the plurality of processes, time information indicating a processing start time and a processing end time of each of the plurality of processes;
specifying a static bottleneck process of the plurality of processes based on the time information; and
calculating, for each of the individual products, an expected completion time of processing by the production line based on an end time of the static bottleneck process for the individual product during a period that is prior to the occurrence of the event.
